(19) **Europäisches Patentamt**

**European Patent Office**

**Office européen des brevets**

(11) **EP 1 057 878 A1**

(12) **EUROPEAN PATENT APPLICATION**

(43) Date of publication:
06.12.2000 Bulletin 2000/49

(51) Int. Cl.7: **C09D 11/02**

(21) Application number: **00111204.4**

(22) Date of filing: **24.05.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **03.06.1999 JP 15588299**

(71) Applicant:
**RISO KAGAKU CORPORATION**
**Tokyo (JP)**

(72) Inventor:
**Okuda, Sadanao,**
**c/o Riso Kagaku Corp.,**
**R&D Center**
**Inashiki-gun, Ibaraki-ken, 300-0333 (JP)**

(74) Representative:
**Wilhelms, Rolf E., Dr.**
**WILHELMS, KILIAN & PARTNER**
**Patentanwälte**
**Eduard-Schmid-Strasse 2**
**81541 München (DE)**

(54) **Emulsion ink for stencil printing**

(57) A W/O emulsion ink for stencil printing is provided which exhibits less viscosity changes of the ink, and can constantly provide printed matter of quality. The emulsion ink comprises 20 to 50 % by weight of an oil phase and 80 to 50 % by weight of a water phase, and an alkyd resin and one or more kinds of surfactants are contained in the oil phase. The surfactant is added in an amount of 0.5 % by weight to 3.0 % by weight, and preferably 0.6 to 1.8 % by weight based on the total amount of the ink. The surfactant is preferably a nonionic surfactant, and has an HLB in a range of 1.5 to 6.0. The alkyd resin may properly be added in an amount of 4.0 to 20.0 % by weight based on the total amount of the ink.

**EP 1 057 878 A1**

**Description**

The present invention relates to an emulsion ink for stencil printing. More particularly, it relates to an emulsion ink for stencil printing, which exhibits less viscosity changes of ink, and hence can constantly provide printed matter of quality.

Stencil printing is accomplished by perforating a stencil sheet to obtain a master for stencil printing, and passing an ink through perforated portions of the master to perform printing on an article to be printed such as paper. The stencil printing has found widespread applications because of its easy master-making. As inks for stencil printing, water-in-oil (W/O) emulsion inks have been generally used (see Japanese Laid-Open (Kokai) Patent Publication Nos. Sho 61-255967 and 64-14284, Japanese Laid-Open (Kokai) Patent Publication Nos. Hei 4-132777, 5-117565, and 7-179799).

A surfactant, i.e., an emulsifying agent is used in order to form and stabilize the W/O emulsion. Nonionic surfactants are often used as the surfactant (see Japanese Laid-Open (Kokai) Patent Publication Nos. Hei 7-150091, 6-329970, 6-145577, and 6-145576, Japanese Examined (Kokoku) Patent Publication Nos. Hei 3-78433 and 3-2462, and Japanese Examined (Kokoku) Patent Publication No. Sho 52-7370).

Generally, the stability of an emulsion is improved by the following methods in which: (1) difference in density between both liquid phases is decreased; (2) viscosity of the continuous phase is increased; (3) interfacial tension between both liquid phases is decreased; (4) a relatively wide electric double layer is formed at the interface of emulsion particles, (5) mechanical toughness is improved to a certain degree in the adsorption layer on the surface of emulsion particles; (6) emulsion particles are reduced in size; and the like.

However, the methods (1) and (2) cannot be adopted for the emulsion ink for stencil printing as in the present invention because of their nature. Namely, for the method (1), since the oil phase to be used for stencil printing is comprised mainly of petroleum solvent and vegetable type solvent, it is difficult to decrease the difference in density between both liquid phases. As for the method (2), there is a limit on setting the viscosity of an ink extremely high whilst the ink is ensured to have the properties of transferability to an article to be printed, low viscosity change with respect to temperature, and the like.

Therefore, for the prior art emulsion ink for stencil printing, the stability of the emulsion has been generally improved by the methods (3) to (6). However, there is no specific technique yet for the method (5). Further, with the method (6), not only the stability of the emulsion is changed, but also even the permeation speed and depth of the ink in emulsion state into woodfree paper which is often used as an article to be printed are changed due to the size of emulsion particles. Consequently, the size of particles must be restricted up to a certain degree of appropriate size.

Further, for the methods (3) and (4), there has been conventionally proposed use of various surfactants in order to vary the interface characteristics of the emulsion. As the amount of the surfactant to be used, there is disclosed generally about 2.2 to 5.5 % by weight (Japanese Laid-Open (Kokai) Patent Publication No. Hei 10-245516), 3.0 to 20 % by weight (Japanese Laid-Open (Kokai) Patent Publication No. Hei 10-81846), or 2.0 to 35 % by weight (Japanese Laid-Open (Kokai) Patent Publication Nos. Hei 10-81844 and 9-40897). However, viscosity decrease of the emulsion may still occur depending upon the amount of the surfactant added.

In view of the foregoing problems, it is therefore an object of the present invention to provide an emulsion ink for stencil printing, which exhibits less viscosity changes and is capable of constantly providing printed matter of stable quality.

The present inventor has conducted a close study for the foregoing object. Consequently, they have found that the foregoing object can be attained by the following water-in-oil (W/O) emulsion ink for stencil printing having an oil phase and a water phase. In the W/O emulsion ink, the emulsion ink comprises 20 to 50 % by weight of the oil phase and 80 to 50 % by weight of the water phase, an alkyd resin and one or more kinds of surfactants are contained in the oil phase, and the surfactant is added in an amount in the range of 0.5 % by weight to 3.0 % by weight based on the total amount of the ink.

Namely, the present inventor has found that the W/O emulsion ink which comprises 20 to 50 % by weight of the oil phase and 80 to 50 % by weight of the water phase, and contains an alkyd resin in the oil phase, is considerably improved in emulsion stability by adding thereto the surfactant in an amount of 0.5 to 3.0 % by weight based on the total amount of the ink.

In stencil printing, when the plate (i.e., perforated stencil sheet) of a stencil printing machine is peeled away from an article to be printed, stringing may occur at a solid region of a printed image due to tack of ink. Consequently, marks of stringing may occur on a lower portion of the solid region, thereby considerably reducing reproducibility for original copy. As for the ink according to the present invention, the water phase exists as a dispersed phase in the oil phase, and acts as an anti-stringing agent, and hence printability is improved. Especially when the proportion of the water phase is 50 % by weight or more, there can be obtained an ink not only less undergoing stringing, but also causing no ink spill from a printing drum and good in permeability into an article to be printed. Further, the stability of the emulsion can be ensured by setting the proportion of the water phase at 80 % by weight or less.

In the emulsion ink of the present invention, the surfactant is added in an amount in the range of 0.5 to 3.0 % by weight, and preferably in the range of 0.6 to 1.8 % by weight based on the total amount of the ink. Within this range, supposedly, since the density of the surfactant oriented at the interface between the oil phase and the water phase (interface density) is high, the emulsion is stabilized. Supposedly, when the amount of the surfactant is less than 0.5 % by weight, the surfactant oriented at the interface is decreased in amount, reducing the stability of the emulsion. When it is more than 3.0 % by weight, the surfactant which will not be oriented at the interface with the water phase is increased in amount, still reducing the stability of the emulsion.

In the present invention, as the surfactant, one having an HLB of 1.5 to 6.0 is used for forming the W/O emulsion. When the HLB is in the range of 1.5 to 6.0, interfacial tension is reduced so as to provide an optimum condition for forming the W/O type emulsion. When the HLB is less than 1.5, the function as a surfactant is reduced, and lipophilicity is enhanced. Therefore, it becomes difficult to form the W/O type emulsion. When the HLB exceeds 6, hydrophilicity is enhanced. Therefore, it also becomes difficult to form the W/O type emulsion for the opposite reason to the foregoing. This surfactant may be comprised of one or more kinds of surfactants.

Further, in the present invention, the oil phase contains an alkyd resin. The alkyd resin has functions of adjusting the viscosity of the oil phase, and improving fixation of the ink. The alkyd resin is similar in structure to the surfactant. Namely, the alkyd resin has a hydrophobic group and a hydrophilic group within one molecule, and is supposed to contribute to the emulsion formation by itself. Therefore, it is considered that the stability of the emulsion is reduced when the alkyd resin is used in excess amounts as in the case of the aforesaid surfactant. In the present invention, the amount of the alkyd resin to be added is preferably in the range of 4.0 to 20.0 % by weight, and more preferably in the range of 8.0 to 20.0 % by weight based on the total amount of the ink.

The emulsion ink of the present invention is prepared, for example, by gradually adding 80 to 50 % by weight of a water phase to 20 to 50 % by weight of an oil phase to emulsify the mixture. A colorant may be contained in at least one of the oil phase and the water phase.

As the colorants, known pigments are used. Examples of the pigments for monochrome include carbon blacks such as furnace carbon black, lampblack, acetylene black, and channel black; metals such as copper, iron, and titanium oxide; and organic pigments such as insoluble azo, soluble azo, phthalocyanine, and quinacridone. Addition amount of these colorants are preferably 1 to 20 % by weight based on the total weight of the emulsion ink.

The oil phase can be comprised of a nonvolatile solvent, a volatile solvent, a surfactant (an emulsifying agent), an alkyd resin, and the like.

Further, examples of the resin to be usable in addition to the alkyd resin include phenol resin, maleic resin, petroleum resin, rubber resin, and rosin-modified resin.

The nonvolatile solvent include mineral oils such as motor oil, spindle oil, machine oil, and liquid paraffin; and vegetable oils such as olive oil, castor oil, and salad oil. The volatile solvents include known mineral oil type solvents and vegetable oil type solvents.

The surfactant (emulsifying agent) is used for forming the W/O type emulsion, and a nonionic surfactant is preferably used. Examples thereof include sorbitan higher-fatty acid esters such as sorbitan monolaurate, sorbitan monopalmitate, and sorbitan sesquioleate, fatty acid glycerides such as oleic acid monoglyceride and oleic acid diglyceride, sorbitol fatty acid esters, polyglycerin higher fatty acid esters, and further ethylene oxide adducts of higher alcohols, alkylphenols, fatty acids, or the like.

The water phase can contain an electrolyte, an O/W type resin emulsion, a water-soluble resin, a wetting agent, an antioxidant, and the like, in addition to water.

As electrolyte components, divalent and/or trivalent metal salts such as magnesium salts and aluminium salts are desirably used. Further, basic salts of a monovalent alkali and/or weak acid may be added thereto.

Examples of the O/W type resin emulsion include emulsions of resins such as polyvinyl acetate, ethylene-vinyl acetate copolymer, vinyl acetate-acrylic acid ester copolymer, polymethacrylic acid ester, polystyrene, styrene-acrylic acid ester copolymer, styrene-butadiene copolymer, vinylidene chloride-acrylic acid ester copolymer, vinyl chloride, vinyl chloride-vinyl acetate copolymer, and urethane.

Examples of the water-soluble resin include polyvinyl alcohol, methyl cellulose, carboxymethyl cellulose, hydroxyethyl cellulose, polyvinyl pyrrolidone, polyethylene-polyvinyl alcohol copolymer, polyethylene oxide, polyvinyl ether, polyacrylamide, gum arabic, starch, water-soluble urethane, and the like.

The amount of each of these resin components to be added is preferably in the range of 1 to 20 % by weight, and more preferably in the range of 2 to 10 % by weight in terms of a solid content based on the total amount of the emulsion ink. If it is less than 1 % by weight, the colorant component in the water phase may not completely be fixed to an article to be printed. If it exceeds 20 % by weight, the ink may form a film on the perforated portions of the plate to inhibit passage of the ink when the ink is left for a long time after plate-making.

Examples of the wetting agent include polyhydric alcohols such as ethylene glycol, sorbitol, and glycerin, and polyethylene glycol.

Examples

Below, the present invention will be explained in detail by way of examples. However, it should be construed that the present invention is not limited to the following examples.

Example 1

An emulsion ink for stencil printing was prepared in accordance with the formulation shown in Table 1. First, carbon black, alkyd resin, and a part of No. 5 solvent (manufactured by Nippon Mitsubishi Oil Co. Ltd.) were dispersed by a triple roll mill to prepare a dispersion. Then, to the resulting dispersion, were added the remaining amount of No.5 solvent and sorbitan sesquioleate to obtain an oil phase. On the other hand, water, magnesium sulfate, sodium hydroxide, and ethylene glycol were mixed to obtain a water phase. The resulting water phase was gradually added to the oil phase under agitation for emulsification using a high-speed agitator at 2000 rpm (number of revolutions of the agitating blade) to obtain an emulsion ink for stencil printing.

Examples 2 and 3, and Comparative Examples 1 to 3

Emulsion inks for stencil printing were prepared in the same manner as in Example 1, except for using the formulations shown in Table 1.

Test Example

Viscosity change over 3 months at 50°C was measured for each of the emulsion inks for stencil printing prepared in Examples 1 to 3 and Comparative Examples 1 to 3. Then, the viscosity change is expressed as a lowering rate of viscosity in accordance with the following equation. It is noted that a logarithmic processing has been performed in the equation because the prepared inks had different initial viscosities, respectively. The results are shown in Table 1. Viscosity measurement was carried out by means of a Vismetron viscometer VDA type (manufactured by Sibaura System K.K.) under the conditions of a No.4 rotor and 60 rpm.

$$\text{Lowering rate of viscosity =}$$
$$[\log(\text{initial viscosity}) - \log(\text{viscosity after the ink is left})]/(\text{number of days that the ink is left})$$

Further, using each ink which has been left for 3 months at 50°C, printing was carried out with a rotary stencil printing machine (trade name: RISOGRAPH (registered trademark) GR-275, manufactured by Riso Kagaku Corporation). Then, organoleptic evaluation was conducted in accordance with the following criteria for the printabilities such as lightface reproducibility and offset. The results are shown in Table 1.

Evaluation criteria

○ : Satisfactory as printed matter.
X: Insufficient as printed matter.
X X: Only extremely bad printed matter can be obtained.

Table 1: Formulations of w/o emulsion inks (parts by weight)

| | | | Ex.1 | Ex.2 | Ex.3 | Comp. Ex.1 | Comp. Ex.2 | Comp. Ex.3 |
|---|---|---|---|---|---|---|---|---|
| A | Resin component | Alkyd resin | 15.0 | 15.0 | 15.0 | 15.0 | 15.0 | - |
| | | Petroleum resin | - | - | - | - | - | 15.0 |
| | Solvent | No.5 Solvent | 5.0 | 5.0 | 5.0 | 5.0 | 5.0 | 5.0 |
| | Surfactant | Sorbitan higher fatty acid ester (HLB 3.5) | 1.0 | 3.0 | 0.2 | 0.3 | 5.0 | 3.0 |
| | | Polyglycerin higher fatty acid ester (HLB 5.0) | - | - | 0.3 | - | - | - |
| B | Colorant | Carbon black | 5.0 | 5.0 | 5.0 | 5.0 | 5.0 | 5.0 |
| | Divalent /trivalent metal salt | Magnesium sulfate heptahydrate | 1.5 | 1.5 | 1.5 | 1.5 | 1.5 | 1.5 |
| | Monovalent basic salt | Sodium hydroxide | 0.5 | 0.5 | 0.5 | 0.5 | 0.5 | 0.5 |
| | Wetting agent | Ethylene glycol | 5.0 | 5.0 | 5.0 | 5.0 | 5.0 | 5.0 |
| | Water | | 67.0 | 65.0 | 67.5 | 67.7 | 63.0 | 65.0 |
| Total | | | 100.0 | 100.0 | 100.0 | 100.0 | 100.0 | 100.0 |
| Lowering rate of viscosity | | | 0.10 | 0.22 | 0.15 | 0.38 | 0.58 | 0.45 |
| Printability | | | O | O | O | × | ×× | × |

Notes A: Oil phase component,   B: Water phase component

The results shown in Table 1 indicates that the emulsion inks for stencil printing according to the present invention exhibit a lower lowering rate of viscosity of the emulsion, and are also more excellent in printability as compared with the case of Comparative Examples.

According to the present invention, in a W/O type emulsion ink comprising 20 to 50 % by weight of an oil phase and 80 to 50 % by weight of a water phase, an alkyd resin is contained in the oil phase, and the amount of a surfactant to be added is restricted within the range of 0.5 to 3.0 % by weight, and preferably 0.6 to 1.8 % by weight, which is lower than the prior art range. Consequently, an ink combining an emulsion stability with printability can be obtained. That is, the ink of the present invention is excellent in press stability of the emulsion, and also low in stringing during printing and excellent in permeability into an article to be printed. Therefore, it can constantly provide printed matter of good quality.

While the presently preferred embodiments of the present invention have been shown and described, it will be understood that the present invention is not limited thereto, and that various changes and modifications may be made by those skilled in the art without departing from the scope of the invention as set forth in the appended claims.

**Claims**

1. A water-in-oil (W/O) emulsion ink for stencil printing, which comprises 20 to 50 % by weight of an oil phase and 80 to 50 % by weight of a water phase, said oil phase containing an alkyd resin and one or more kinds of surfactants, wherein addition amount of said surfactant is in a range of 0.5 % by weight to 3.0 % by weight based on the total amount of the ink.

2. The emulsion ink for stencil printing according to claim 1, wherein the addition amount of said surfactant is in a range of 0.6 % by weight to 1.8 % by weight based on the total amount of the ink.

3. The emulsion ink for stencil printing according to claim 1, wherein said surfactant is a nonionic surfactant.

4. The emulsion ink for stencil printing according to claim 1, wherein said surfactant has an HLB in the range of 1.5 to 6.0.

5. The emulsion ink for stencil printing according to claim 1, wherein said alkyd resin is contained in an amount of 4.0 to 20.0 % by weight based on the total amount of the ink.

**European Patent Office**

**EUROPEAN SEARCH REPORT**

Application Number

EP 00 11 1204

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 795 590 A (RISO KAGAKU CORP) 17 September 1997 (1997-09-17) * page 5, line 8-23 * Comparative example 4 * table 3 * | 1-5 | C09D11/02 |
| X | DATABASE WPI Section Ch, Week 199823 Derwent Publications Ltd., London, GB; Class A25, AN 1998-255599 XP002146698 & JP 10 081846 A (TOHOKU RIKO KK), 31 March 1998 (1998-03-31) See paragraphs 5, 8 and 9 of the translated version. * abstract * | 1-5 | |
| X | EP 0 846 737 A (RISO KAGAKU CORP) 10 June 1998 (1998-06-10) * page 3, line 37 * * page 3, line 39-46; table 1 * | 1-3,5 | |

TECHNICAL FIELDS SEARCHED (Int.Cl.7)

C09D

The present search report has been drawn up for all claims

| Place of search | Date of completion of the search | Examiner |
|---|---|---|
| THE HAGUE | 6 September 2000 | Miller, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 00 11 1204

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2000

| Patent document cited in search report | | Publication date | Patent family member(s) | | Publication date |
|---|---|---|---|---|---|
| EP 0795590 | A | 17-09-1997 | JP<br>US | 9249840 A<br>5776232 A | 22-09-1997<br>07-07-1998 |
| JP 10081846 | A | 31-03-1998 | NONE | | |
| EP 0846737 | A | 10-06-1998 | JP<br>US | 10168369 A<br>5948151 A | 23-06-1998<br>07-09-1999 |